# EUROPEAN PATENT APPLICATION

(11) **EP 4 793 104 A1**
(43) Date of publication of application: **19.08.2026**
(21) Application number: 25157495.0
(22) Date of filing: 12.02.2025
(51) Int. Cl.: B60R 19/16, B62D 21/15

(54) **LATERAL PUSH ELEMENT, BEAM COMPONENT, SYSTEM COMPRISING ONE OR TWO BEAM COMPONENTS, VEHICLE COMPRISING THE SYSTEM, METHOD FOR MANUFACTURING THE BEAM COMPONENT, AND METHOD FOR MANUFACTURING THE VEHICLE**

(71) Applicant: Volvo Car Corporation, 405 31 Göteborg (SE)
(72) Inventor: BECHARA, José, 40531 Göteborg (SE); MOSTOFIZADEH, Salar, 40531 Göteborg (SE)
(74) Representative: Kransell & Wennborg KB

(57) **Abstract**

The disclosure relates to a lateral push element (10) configured for generating a lateral force on a vehicle (1) by redirecting a force developed during a collision of the vehicle (1), wherein the lateral push element (10) is configured to be arranged at an end portion (111) of a beam component (11), the end portion (111) being at an end of the beam component (11) on its longitudinal axis (LB), the beam component (11) being configured to be arranged on a front side (F) of the vehicle (1) and being configured for absorbing and/or dissipating energy during the collision. The present disclosure relates further to a beam component (11), to a system (2), to a vehicle (1), to a method for manufacturing the beam component (11), and to a method for manufacturing the vehicle.

## Description

### TECHNICAL FIELD

The present disclosure relates to a lateral push element configured for generating a lateral force on a vehicle by redirecting a force developed during a collision of the vehicle. The present disclosure relates further to a beam component configured to be arranged on a front side of a vehicle, to a system configured to be arranged on a front side of a vehicle, to a vehicle comprising the system, to a method for manufacturing the beam component, and to a method for manufacturing the vehicle.

### BACKGROUND ART

To ensure the safety of occupants of vehicles, the vehicles are being equipped with increasingly advanced safety systems. Further, also the structures of the vehicles themselves should also be particularly designed to be sufficiently robust in case of a collision. Hereto, particularly the front structure of the vehicles can be designed such that in case of a so-called small overlap collision, the vehicles are intended to move sideways away from the imparting object. A small overlap collision occurs when a front corner of a vehicle collides with another vehicle or an object such as a tree, utility pole etc. In this type of collision, only a part of the vehicle's front width overlaps with the object it strikes because the collision is mainly at either of the front corners of the vehicle. The small overlap collisions are particularly challenging for vehicle safety systems due to several reasons. For example, the collision forces may primarily affect the vehicle's outer edges, which are not well protected by typical crush-zone structures. Further, the collision may often cause the front wheel to be forced rearward into the footwell, leading to significant intrusion in the occupant compartment. Additionally, occupants may move both forward and toward the side of the vehicle, challenging some safety belt and airbag designs.

Thus, designing the front structure of a vehicle is aimed such that as a result of the collision a lateral force is generated acting on the vehicles. The benefit of this is that less energy is transferred to the vehicle's main structure, which thereby protects the occupants of the vehicle, hence, a lower fraction of the kinetic energy is absorbed by the vehicle. For example, forces on the occupants may be reduced by introducing a side-way movement of the vehicle in case of the small overlap collision. It is therefore an objective of the present disclosure to reduce collision impact on a vehicle and improve occupant safety.

### SUMMARY

The problem is at least partially solved or alleviated by the subject matter of the independent claims of the present disclosure, wherein further examples are incorporated in the dependent claims.

According to a first aspect, there is provided a lateral push element configured for generating a lateral force on a vehicle by redirecting a force developed during a collision of the vehicle, wherein the lateral push element is configured to be arranged at an end portion of a beam component, the end portion being at an end of the beam component on its longitudinal axis, the beam component being configured to be arranged on a front side of the vehicle and being configured for absorbing and/or dissipating energy during the collision.

Thus, the lateral push element may be understood as a component that provides resistance against force(s) developed during a collision of the vehicle. By arranging the lateral push element that is arranged at the front side of the vehicle, a creation of a side push for the vehicle may be enabled, for instance during a frontal side collision such as the small overlap collision. The lateral push element may be seen as a side push element of the front structure of the vehicle.

The lateral push element is configured to be arranged at an end portion of a beam component of the front structure of the vehicle. The beam component may comprise two end portions at its longitudinal axis, on opposite ends. The longitudinal axis of the beam component may be defined to extend along a length of the beam component. Accordingly, the end portions may be understood to be on a same plane along the beam component. The end portions may account to a portion of the beam component that extend around 25% of the beam component from the end of the beam component at its longitudinal axis. Accordingly, the beam component comprises two end portions at its longitudinal ends and the lateral push element may be arranged at at least one of the two end portions of the beam component. Thus, the lateral push element may be a small component compared to the front structure of the vehicle or to at least a whole beam component of the front structure of the vehicle. Thereby, the lateral push element may not add an excessive additional weight to the front structure of the vehicle. Additional weight could be disadvantageous for the following reasons.

For example, a heavier vehicle may have more kinetic energy during a collision, which can lead to more severe impacts and potentially greater damage. Further, a heavy front structure may reduce vehicle's handling and performance as more weight in the front of the vehicle can affect its weight distribution, potentially impacting handling characteristics and overall performance. A lateral push element that is small compared to the whole front structure of the vehicle may not essentially increase the weight of the front structure of the vehicle and may avoid said disadvantages. By implementing the lateral push element according to the present disclosure, a collision resilience may be improved while essentially maintaining the overall vehicle's weight, particularly, the weight of the front structure of the vehicle.

The object may slide off after the initial impact such that the total kinetic energy of the vehicle does not need to be absorbed by the front structure of the vehicle. For this, a side push for the front structure of the vehicle is created. The idea proposed here is to add lateral push elements at the corners/sides of the front structure of the vehicle and, particularly, at the end portions of at least one beam component of the front structure of the vehicle to avoid its full compression during the collision which in turn would create an improved side push for the vehicle. Thereby, the vehicle's occupant safety during the frontal side collision of the vehicle is improved. The present disclosure improves the front structure of the vehicle. The forces generated in the collision may avoid a strong (or even full) compression of the front structure of the vehicle and, particularly, of the beam component of the front structure. The forces generated in the collision may further have the ability to go into a front wheel, suspension system and/or firewall. It is not unusual that the front wheel may be forced into a footwell, generating more intrusion in a driving compartment that could result in serious leg and foot injuries. The improvement of the front structure of the vehicle is directed, for example, to avoiding or at least reducing its full compression (in particular a full compression of the respective beam end portion) during the small overlap frontal collision by creating an improved side push for the vehicle.

According to an example of the present disclosure, the lateral push element is configured to prevent full compression of the beam component and/or to reduce compression of the beam component. Thus, the lateral push element may contribute to maintaining the stability of the whole front structure of the vehicle and to the safety of the vehicle's occupants.

According to an example of the present disclosure, the collision is a small overlap frontal collision. During the small overlap frontal collision, the vehicle may impact an object at either of its two front corners, for example with an overlap of 25% or less between the vehicle front side width and the object. An overlap of more than 25%, but for instance less than 50% may also be considered as small overlap frontal collision. Thus, the lateral push element reduces damage on the front structure of the vehicle and increases safety of vehicle's occupants particularly in case of small overlap frontal collisions, which, as explained above, occur when especially a front corner of the vehicle collides with another vehicle or an object such as a tree, utility pole etc. Furthermore, adding lateral push elements at the front side of the vehicle and, particularly, at end portions of at least one beam component would provide the improved side push in all collisions where vehicle slides away from the object (possibly also when the overlap between the front side of the vehicle and the object is more than 50%).

According to an example of the present disclosure, the lateral push element is arrangeable at an end portion of the beam component, and/or partially around the beam component. According to yet an example of the present disclosure, the lateral push element is arrangeable at the end portion of the beam component by at least one of the following: inserting the lateral push element into the beam component at the end portion of the beam component; and/or arranging the lateral push element at least partially around the beam component at the end portion of the beam component. The beam component may have a tubular form. The tubular form may have a rectangular or a circular cross-section. In this case the beam component may be referred to as a hollow beam component. The lateral push element may be at least partially provided within the tubular form of the beam component. The hollow beam component, and/or the beam component comprising hollow parts, may have the advantage of being lightweight. By at least partially removing material from the interior of the beam component, a significant reduction of the overall weight of the beam component may be achieved while maintaining structural integrity. This weight reduction may contribute to improved fuel and/or energy efficiency and overall vehicle performance. Further, a hollow beam component or hollow parts of the beam component may effectively absorb impact energy during collisions because they provide a longer collapse distance compared to a less hollow/more solid beam component or less hollow/more solid parts of the beam component, allowing for better energy absorption during collisions/impacts. Further, a hollow beam component or hollow parts of the beam component may be designed to deform in a controlled manner, dissipating kinetic energy from collisions. Moreover, a hollow beam component or hollow parts of the beam component may offer excellent collision resilience because they may be engineered to absorb a part of the total energy in a collision and because their design may be optimized to provide protection in both low-velocity and high-velocity collision/impact scenarios. Thus, a hollow beam component, or a beam component comprising hollow parts, may provide safety and/or efficiency advantages.

Alternatively, or additionally, the lateral push element may be provided on an outer periphery of the beam component. The lateral push element may at least partially cover the outer periphery of the beam component. The outer periphery at a front side of the beam component may be, preferably, free from the lateral push element. The outer periphery at the front side of the beam component may be facing away from a vehicle cabin of the vehicle. For instance, the lateral push element may be provided at three sides of a rectangular hollow beam component other than the front side of the beam component. Inserting the lateral push element into the beam component at the end portion of the beam component effectively utilizes the space of the front structure of the vehicle, wherein at the same time the further advantages associated with the lateral push element of the present disclosure are achieved (e.g., avoiding or at least reducing full compression of the beam component at least partially) during a collision such as a small overlap frontal collision and/or creating an improved side push for the vehicle. Arranging the lateral push element at least partially around the beam component at the end portion of the beam component does not take much space in the vehicle's front structure as well and likewise enables achieving the further advantages associated with the lateral push element of the present disclosure.

The lateral push element may be arranged at the end portion of the beam component as in the two arrangements disclosed at the same time. In other words, the lateral push element may be inserted into the beam component at the end portion of the beam component as well as arranged at least partially around the beam component. Thereby, the lateral push element may generate more lateral force on the vehicle by redirecting the force developed during a collision of the vehicle.

Furthermore, the lateral push element may work in conjunction with other structural components of the vehicle and, thereby, create a cohesive safety system. The lateral push element may interact with the vehicle's structural components to enhance overall collision performance (e.g., improve occupant protection, reduce the compression at the corner of the beam instead of the beam). For example, the beam component may be attached to the vehicle via at least a rear support. When the end portion of the beam component of the vehicle is bent against the rear support, the lateral push element arranged at the end portion of the beam component may work in conjunction with the rear support or interact with it and, thereby, enhance the overall collision performance. The interaction may cause an earlier generation of lateral force(s) on the vehicle and, thereby, an increase of the lateral motion of the vehicle away from the object.

The lateral push element, by the generation of the lateral force(s) on the vehicle during collision, may reduce the compression of the beam component and/or prevent a full compression of the beam component. This arrangement further improves the stability of the vehicle's front structure in case of a collision and provides further safety for the vehicle's occupants.

According to an example of the present disclosure, the lateral push element may be made of a material configured for generating the lateral force on the vehicle by redirecting a force developed during the collision. For example, the material, of which the lateral push element is made, may comprise, or be made of, foam and/or plastic. Lateral push elements of foam and/or plastic enable implementation of light-weight lateral push elements and avoiding essential increase of weight of the vehicle's front structure. By that, vehicle's weight, cost, and/or carbon footprint may be reduced especially compared to alternative solutions and/or alternative/heavier materials.

The foam used in the lateral push element may be, for example: flexible polyurethane foam, IMPAXX^{™} foam, closed-cell styrenic foam, polypropylene, and/or any other foam (e.g., high density foam) designed to absorb energy and/or distribute forces and, thereby, improve vehicle collision safety.

The plastic used in the lateral push element may be, for example, polypropylene (PP), acrylonitrile butadiene styrene (ABS), polycarbonate (PC), expanded polypropylene (EPP), composite material such as carbon fiber reinforced polymers (CFRP), etc., and/or any other plastic designed to absorb energy and/or distribute forces and, thereby, improve vehicle collision safety.

The lateral push element may be made (at least partially) also of metal. The metal used in the lateral push element may be, for example, aluminum, steel, and/or any other metal designed to absorb energy and/or distribute forces and, thereby, improve vehicle collision safety. Nevertheless, usage of metal should be limited in order not to increase the weight of the front structure of the vehicle.

Generally, the lateral push element of the present disclosure may be made of any appropriate material or of combination of any appropriate materials. The present disclosure is not limited to a particular material for forming the lateral push element.

A combination of materials may be, for example, appropriate when the lateral push element comprises a first part inserted into the beam component (for instance, into the tubular form of the beam component) at the end portion of the beam component and a second part arranged at least partially around the beam component (for instance, at the outer periphery of the beam component) at the end portion of the beam component. For example, the first part and the second part of the lateral push element may be formed of different materials. The materials may be chosen such that an optimal lateral force generation on the vehicle by redirecting the force developed during a collision of the vehicle may be achieved. The stability of the vehicle's front structure may be improved by choosing corresponding material(s) for the lateral push element.

According to a second aspect, there is provided a beam component configured to be arranged on a front side of a vehicle. The beam component is configured for absorbing and/or dissipating energy during a collision. A corresponding lateral push element according to the first aspect of this disclosure is arranged at each end portion of the beam component.

The beam component may be configured to be attached to the front side of the vehicle via at least two rear supports of the beam component and the lateral push elements may be provided on the beam component laterally outside the two rear supports (towards the end portions of the beam component). The beam component may have a curved/rounded shape. The curved shape of the beam component may provide an improvement in stiffness as the beam component is bent outwards (away from the vehicle cabin). This may be advantageous in case of collision. For example, in case of a collision e.g., a small overlap frontal collision, a full compression of the beam component may be prevented, and/or compression of the beam component may be reduced.

According to an example, the beam component may be a bumper beam and/or a lower beam component of the vehicle. The bumper beam may serve several crucial functions in a vehicle. For example, the bumper beam may be arranged for energy absorption and reducing the impact force transmitted to the vehicle's occupant compartment. Further, the bumper beam may provide bending resistance to minimize damages on vehicle and, particularly, on the vehicle's front structure in collisions such as low-impact, for instance low-speed collisions. The bumper beam may provide also structural support because it may act as a main structural component of a bumper system, working in conjunction with other elements of the vehicle's structural components such as energy-absorbing box and a mounting plate. The bumper beam may provide vehicle's front corner protection as it may extend laterally to protect the corners of the vehicle in collisions, e.g., low-speed collisions and/or small overlap frontal collision.

The lower beam component may be provided under the bumper beam, preferably parallel to the bumper beam. The lower beam component may comprise a similar geometry and/or length as the bumper beam. In high-speed crash scenarios, the lower beam component may enhance overall performance by providing additional energy absorption capacity. When the lower beam component protrudes beyond the bumper beam, it may absorb part of the collision energy and reduce intrusions in severe crashes.

A provision of a corresponding lateral push element at each end portion of the lower beam component may enhance the lower beam component's effectiveness in performing these functions. When the lateral push element is made of a lightweight material (e.g., foam, plastics), also corresponding lightweight characteristics of the lower beam component may be supported.

The bumper beam may be attached to the front structure of the vehicle by, for example, at least one of the following: stays, mounting brackets, energy-absorbing boxes, etc. Stays, for example, may be structural elements that link the bumper beam to the front structure of the vehicle. Mounting brackets may be, for example, used for connecting to a stay (preferably not connected to the bumper beam) and for attaching to a vehicle's side member or front structure. Energy-absorbing boxes such as crash boxes are also well known. They may be placed between the bumper beam and the vehicle's front structure to absorb and dissipate collision/impact energy. The present disclosure is not limited to the above-mentioned components and any further appropriate (well-known) components may be used according to the present disclosure. The methods used for attaching the bumper beam to the front side/front structure of the vehicle may comprise, for example, at least one of the following: use of bolts and nuts for securing the bumper beam to the front/front structure of the vehicle, welding, and/or insertion and interlocking. The present disclosure is, however, not limited to the above-mentioned method and any further appropriate method may be used according to the present disclosure.

When the beam component is a lower beam component, it may also be attached to the front side/front structure of the vehicle through a variety of different well-known components and methods. The present disclosure is not limited to any one of the well-known components and methods. Components used for attaching the lower beam component to the front side/front structure of the vehicle may comprise, for example, vehicle's frame members, mounting units to be attached to chassis pick-up points, ball joints, subframe incorporated in the lower beam component, connection to an upper structure in the front side of the vehicle, energy-absorbing boxes such as crash boxes etc.

Both the bumper beam and the lower beam component of the vehicle (without the lateral push element) are well known components of the front structure of the vehicle. The bumper beam and/or the lower beam component of the vehicle is/are often configured for absorbing and/or dissipating energy during a collision. The lateral push element may be provided on the bumper beam and/or the lower beam component. The lateral push element provided on the lower beam component may be bigger than the lateral push element provided on the bumper beam. By implementing at each end portions of the bumper beam and/or of the lower beam component a corresponding lateral push element of the present disclosure, the energy absorption and/or dissipation properties or functions of the respective bumper beam and/or lower beam component are enhanced and strengthened, which is important in case of a collision. Furthermore, at least partial compression of the bumper beam and/or of the lower beam component of the vehicle may be prevented more effectively and without adding further weight to the bumper beam and/or of the lower beam component. Moreover, compression of the bumper beam and/or of the lower beam component of the vehicle may be reduced more effectively and without adding further weight to the bumper beam and/or of the lower beam component.

According to a third aspect, there is provided a system configured to be arranged on a front side of a vehicle, wherein the system comprises two beam components according to the second aspect of the present disclosure. According to an example, the system may be an integrated beam system. Further, the system may comprise a bumper beam as a first beam component of the two beam components of the system and a lower beam component as a second beam component of the two beam components of the system. More particularly, the bumper beam as an upper beam component may generally take up higher forces during frontal, head-on crashes, whereas the lower beam component may handle forces in low-impact, lower-positioned collisions (such as curbs or low objects). As mentioned above, the first beam component and the second beam component may comprise different material based on the forces each will be exposed to during collision of the vehicle with the object.

According to a fourth aspect, there is provided a vehicle comprising the system according to the third aspect of the present disclosure. The vehicle be an electrically driven vehicle and may comprise an electric motor, or the vehicle may be a fuel-driven vehicle and may comprise an internal combustion engine. Each beam component of the system may be designed differently according to a type of vehicle, such as the electric vehicle or the fuel-driven vehicle.

According to a fifth aspect, there is provided a method for manufacturing a beam component configured to be arranged on a front side of a vehicle, wherein the beam component is configured for absorbing and/or dissipating energy during a collision, wherein the method comprises arranging at each end portion of the beam component a lateral push element according to the first aspect of the present disclosure. The method may comprise arranging the lateral push element on the beam component by using an adhesive such as an epoxy, polyurethane or silicone adhesive; or via mechanical fasteners such as clamps, bolts or screws; or by using head bonding or thermoplastic adhesives.

According to a sixth aspect, there is provided a method for manufacturing a vehicle, wherein the method comprises arranging on a front side of the vehicle the system according to the third aspect of the present disclosure.

It should be noted that the above examples may be combined with each other irrespective of the aspect involved. These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle from top-down view before a small overlap frontal collision according to an example of the present disclosure;
- Figure 2: shows a front view of a beam component during attachment of the lateral push element according to an example of the present disclosure;
- Figure 3: shows a front view of a beam component comprising lateral push elements according to an example of the present disclosure;
- Figure 4A: shows a front view of a system comprising two beam components according to an example of the present disclosure;
- Figure 4B: shows a front view of an alternative system comprising two beam components according to an example of the present disclosure;
- Figure 5A: shows a side cross-section of a beam component according to prior art;
- Figure 5B: shows a side cross-section of a beam component comprising a lateral push element according to the present disclosure;
- Figures 6A to 6C: show side cross-section of alternative beam components according to examples of the present disclosure;
- Figures 7A to 7C: show side cross-section of alternative beam components according to examples of the present disclosure;
- Figure 8: shows top-down view of a vehicle during a small overlap frontal collision at different time points A, B, C, D according to an example of the present disclosure.

### DETAILED DESCRIPTION

The Figures are merely schematic representations and serve only to illustrate examples of the disclosure. Identical or equivalent elements are in principle provided with the same reference signs.

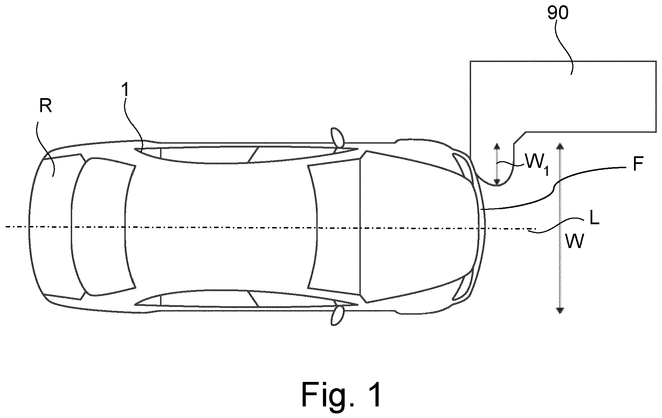

Figure 1 shows a vehicle 1 from top-down view before a small overlap frontal collision according to an example of the present disclosure. A longitudinal axis L of the vehicle 1 is shown along its length. During the small overlap frontal collision, the vehicle 1 impacts an object 90 (e.g., a rigid barrier or a wall in the example of Figure 1) with a certain overlap between the vehicle's frontal corner and a side or part of the object 90. According to a non-limiting example, the front corner may be defined as an outer portion of the front side F of the vehicle 1, having a width W1 amounting to a 25% of the total width of the front side W of the vehicle 1. Figure 1 depicts a state of the vehicle 1 just before the small overlap frontal collision of the vehicle 1 with the object 90.

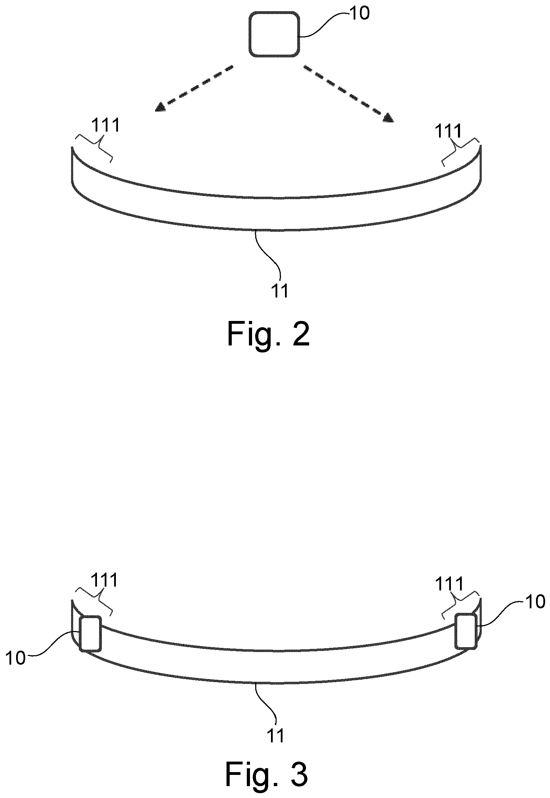

Figure 2 shows a front view of a beam component 11 during attachment of the lateral push element 10 according to an example of the present disclosure. As shown in Figure 2, the lateral push element 10 is configured to be arranged at an end portion 111 of the beam component 11. The end portion 111 is at an end of the beam component 11 on the longitudinal axis L of the beam component 11. Thus, the beam component 11 is configured to be arranged on a front side F of the vehicle 1 (not shown).

Figure 3 shows a front view of the beam component 11 comprising lateral push elements 10 according to an example of the present disclosure. At each end portion 111 of the beam component 11 a corresponding lateral push element 10 is arranged. Thus, the beam component 11 comprises two lateral push elements 10 arranged at its end portions 111. During the small overlap frontal collision, the full compression of the beam component 11 is prevented and/or a compression of the beam component 11 is reduced. Thereby, the lateral push element 10 arranged at the end portion 111, at which the collision happens, generates a lateral force on the vehicle 1 by redirecting the force developed during the collision of the vehicle 1.

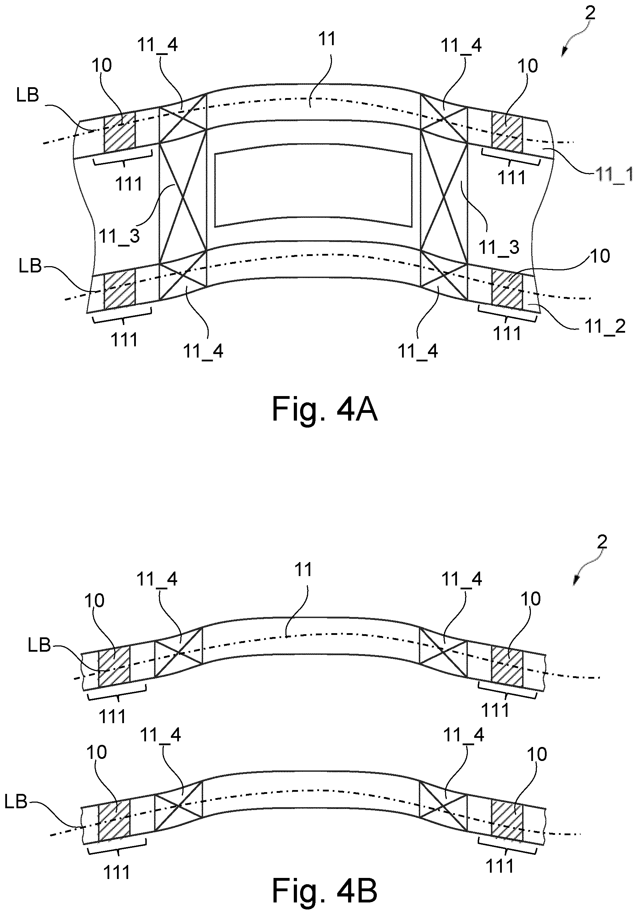

Figure 4A shows a front view of a system 2 comprising two beam components 11 according to an example of the present disclosure. The system 2 of Figure 4A is, accordingly, an integrated bumper system comprising the two beam components 11_1, 11_2, referred to as upper beam component or bumper beam 11_1 and lower beam component 11_2 herein. The two beam components 11_1, 11_2 are combined into a unified whole bumper system by connecting the beam components 11_1, 11_2 via connecting components 11_3 as in Figure 4A. The lower beam component 11_2 of the vehicle 1 may be seen, in comparison to the bumper beam 11_1, as a secondary structural element of the front structure of the vehicle 1 and is arranged to transfer collision energy. The beam component 11 is attached to the front side F of the vehicle 1 (not shown) by two rear supports 11_4 of the beam component 11. The upper and lower beam components 11_1, 11_2 transfer the collision energy via the rear support 11_4 to the vehicle's front body structure. At each end portion 111 of the upper beam component 11_1 and/or of the lower beam component 11_2 a lateral push element 10 is arranged on the longitudinal axis LB of the beam component 11. The lateral push elements 10 are provided on the beam component 11 laterally outside the two rear supports 11_4 (towards the end portions 111 of the beam component 10). The arrangement of the lateral push elements 10 at the two end portions 111 of the upper beam component 11_1 is the same as the arrangement of the lateral push elements 10 at the two end portions 111 of the lower beam component 11_2.

Figure 4B shows a front view of an alternative system 2 comprising two beam components 11 according to an example of the present disclosure. In comparison to the system 2 of Figure 4A, the system of Figure 4B is not an integrated bumper system but a split bumper system, where the two beam components 11_1, 11_2 are independent from each other (not connected through connecting components 11_3 as in Figure 4A). The system 2 of Figure 4B comprises two individual beam components 11_1, 11_2, each one of the beam components 11_1, 11_2 being individually arranged at the front side F/front structure of the vehicle 1 (not shown). The upper beam component 11_1 of Figure 4B may be seen as a bumper beam. Like in Figure 4A, also in Figure 4B, the upper beam component or the bumper beam 11_1 and/or the lower beam component 11_2 has at each end portion 111 on the longitudinal axis LB of the beam component 11 a corresponding lateral push element 10 arranged.

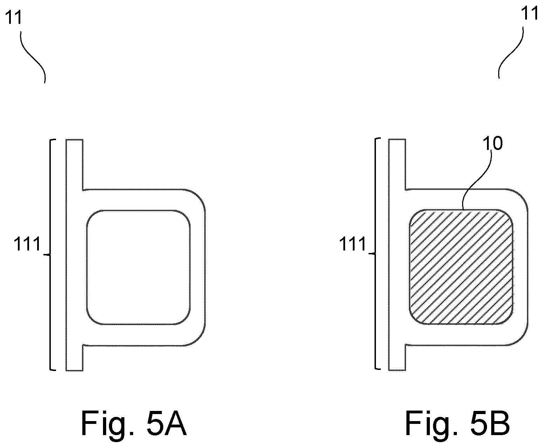

Figure 5A shows a side cross-section of a beam component 11 according to prior art. The beam component 11 does not comprise the lateral push element 10 according to the present disclosure. The front side FB of the beam component in Figure 5A corresponds to the side facing away from the vehicle 1 (depicted as a flat surface), the rear side RBof the beam component corresponds to the side facing a cabin of the vehicle (not shown), in particular, the front side F of the vehicle 1 (depicted as an angular surface). At its rear side RB, the beam component 11 is configured to be attached to the vehicle 1 through at least one rear support 11_4 (not shown).

Figure 5B shows a side cross-section of a beam component 11 comprising a lateral push element 10 according to the present disclosure. The beam component 11 is hollow (has a tubular form). In comparison to Figure 5A, in Figure 5B, the lateral push element 10 is arranged within the tubular form of the beam component 11. The lateral push element 10 may be arranged by inserting it into the beam component 11.

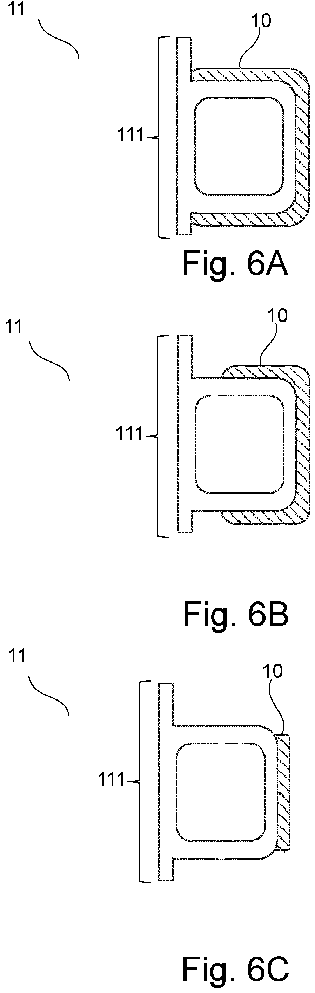

Figures 6A to 6C show side cross-sections of alternative beam components 11 according to different examples of the present disclosure, wherein, in each example, the lateral push element 10 is arranged at the end portion 111 of the beam component 11 at least partially around of the beam component 11. The end portion 111 of the beam component 11 has the tubular form. A plurality of corresponding arrangements are possible according to the present disclosure and the present disclosure is not limited to the arrangements in Figures 6A to 6C only.

In the example of Figure 6A, the lateral push element 10, arranged at the end portion 111 of the beam component 11, partially surrounds the beam component 11 other than the front side FB of the beam component 11. In Figures 6B and 6C, the lateral push element 10 is essentially arranged at the rear side RB of the beam component 11 (but not covering the whole side faces thereof), wherein different parts of the beam component 11 are surrounded by the lateral push element 10. In Figure 6A three sides of the rectangular beam component 11 (outer periphery of the beam component 11 other than the front side FB) is completely surrounded by the lateral push element 10, whereas in Figure 6B the three sides of the rectangular beam component 11 is partially surrounded by the lateral push element 10. The extend of coverage of the lateral push element 10 of the beam component 11 may be decided based on a balance of stiffness provided to the beam component 11 and weight increase caused by the lateral push element 10. In accordance with this, Figure 6C shows an example end portion 111 of the beam component 11 comprising the lateral push element 10 only on a rear side RB thereof, facing the front side F of the vehicle 1. In this example, the lateral push element 10 may affect compression of the beam component 11 less than in the Figures 6A and 6B, yet the lateral push element 10 counteracts the compression of the beam component 11 by generating lateral forces.

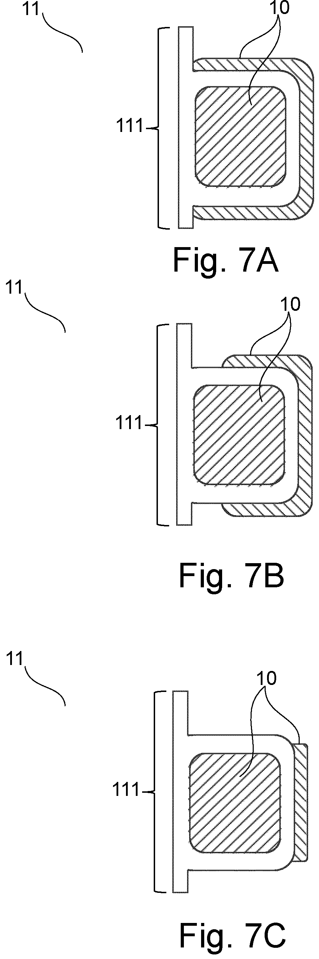

Figures 7A to 7C show side cross-section of alternative beam components 11 according to examples of the present disclosure. In each example, the lateral push element 10 is arranged at the end portion 111 of the beam component 11 at least partially around of the beam component 11 and inside the beam component 11 (within the tubular form of the beam component 11). At least the end portion 111 of the beam component 11 is hollow for enabling the insertion of the lateral push element 10 into the beam component 11.

Generally, examples of Figures 7A to 7C show exemplary combinations of the arrangement in Figure 5B and of the arrangements in Figures 6A to 6C. A combination of both lateral push element arrangement possibilities means that the lateral push element 10 may be seen as a composite element comprising a first part of the lateral push element 10 being inserted into the beam component 11 at the end portion 111 of the beam component 11 and a second part of the lateral push element 10 arranged at least partially around the beam component 11 at the end portion 111 of the beam component 11 in Figures 9A-9C.

When lateral push elements 10 are added at the sides of the front structure of the vehicle and, particularly, at end portions 111 of at least one beam component 11, 11_1, 11_2 (e.g., bumper beam and/or lower beam component) of the front structure of the vehicle 1, the above-listed consequences resulting from the collision may be avoided. The lateral push element(s) 10 at a side of the collision creates an improved lateral/side push for the vehicle 1 and, particularly, for the at least one beam component 11, 11_1, 11_2. Particularly, lateral push element(s) 10 at the side of the collision generate a lateral force on the vehicle by redirecting the force(s) developed during the collision of the vehicle 1. Thus, the vehicle 1 can slide sideways away from the object 90 in the event of the collision without compression or with a strongly reduced compression of the front structure of the vehicle 1 and, particularly, of the beam components 11, 11_1, 11_2 of the front structure and also without the further possible drawbacks mentioned above.

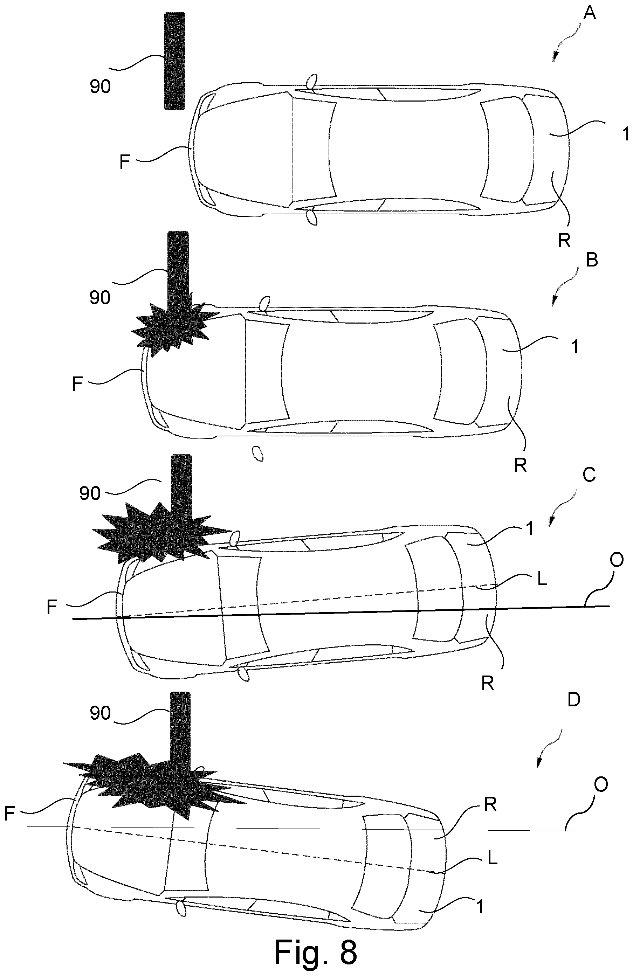

Figure 8 shows a top-down view of a vehicle 1 during a small overlap frontal collision at different time points A, B, C, D according to an example of the present disclosure. The vehicle 1 comprises a lateral push element 10 arranged at the end portion 111 of at least one beam component 11, 11_1, 11_2 (not shown) of the front structure of the vehicle. Figure 8 shows that the vehicle 1 is driving with its right front side F against an object 90. The object 90 is depicted as a rigid object such as a wall or a barrier.

The time point A may be seen as just before a start of the collision with the object 90. At time point A, the vehicle 1, its front structure, and the beam component 11 are undamaged.

The time point B (few ms after the point A) may be seen as the starting point of the collision. At time point B, the end portion 111 of the beam component 11 of the vehicle 1 is starting to bend against the rear support 11_4 of the beam component (not shown), via which the beam component 11 is attached/mounted to the vehicle 1 or against the front structure of the vehicle 1. The end portion 111 of the beam component 11 is between the frontal side F of the vehicle 1 and the object 90. The lateral push element 10 arranged at the end portion 111 of the beam component 11 is, thereby, starting to be subjected to a collision force at the end of time point B.

The time point C (some ms after point B) shows that the vehicle 1 engages with the obstacle 90. At time point C lateral forces are generated. The generation of the lateral force(s) on the vehicle 1 leads to an initiation of a lateral motion of the vehicle 1. Therefore, the vehicle 1 is drifting away from its original orientation depicted with the O axis. In Fig. 8, the front side F of the vehicle 1 is drifting away from the object 90 and a rear side F of the vehicle 1 is drifting towards the object 90.

The time point D (some ms after point C) shows that the lateral push element 10 redirects the collision force(s) developed during the collision of the vehicle 1 and thereby creates a lateral movement of the vehicle 1 in an opposite direction compared to time point C. At time point D, the interaction is to a back structure that generates the rotation while lateral forces pushes the vehicle away from the object 90.

As explained above, the present disclosure improves vehicle's response in frontal collision situations, e.g., in small overlap frontal collision situations. Further, the present disclosure improves the integrity of vehicle's structure upon a collision and safety of vehicle's occupants in the collision situation.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one", "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: Vehicle
- 2: System
- 10: lateral push element
- 11: beam component
- 11_1: upper beam component, bumper beam
- 11_2: lower beam component
- 11_3: connecting component
- 11_4: rear support
- 111: end portion of the beam component
- 90: object
- A: just before a starting point of the collision
- B: few ms after point A
- C: some ms after point B
- D: some ms after point C
- F: front side of the vehicle
- FB: front side of the beam component
- L: longitudinal axis of the vehicle
- LB: longitudinal axis of the beam component
- O: original orientation
- R: rear side of the vehicle
- RB: rear side of the beam component

## Claims

1. A lateral push element (10) configured for generating a lateral force on a vehicle (1) by redirecting a force developed during a collision of the vehicle (1), wherein the lateral push element (10) is configured to be arranged at an end portion (111) of a beam component (11), the end portion (111) being at an end of the beam component (11) on its longitudinal axis (LB), the beam component (11) being configured to be arranged on a front side (F) of the vehicle (1) and being configured for absorbing and/or dissipating energy during the collision.

2. The lateral push element (10) according to claim 1, wherein:
- the lateral push element (10) is configured to prevent full compression of the beam component (11); and/or
- the lateral push element (10) is configured to reduce compression of the beam component (11).

3. The lateral push element (10) according to claim 1 or 2, wherein the collision is a small overlap frontal collision.

4. The lateral push element (10) according to any one of the preceding claims, wherein the lateral push element (10) is made of a material configured for generating the lateral force on the vehicle (1) by redirecting the force developed during the collision.

5. The lateral push element (10) according to claim 4, wherein the material, of which the lateral push element (10) is made, comprises foam and/or plastic.

6. A beam component (11) configured to be arranged on a front side (F) of a vehicle (1), wherein the beam component (11) is configured for absorbing and/or dissipating energy during a collision, and wherein, at each end portion (111) of the beam component (11), a corresponding lateral push element (10) according to any one of the preceding claims is arranged.

7. The beam component (11) according to claim 6, wherein the beam component (11) comprises a bumper beam (11_1) and/or a lower beam component (11_2) of the vehicle (1).

8. The beam component (11) according to any one of the previous claims 6 or 7, wherein the beam component (11) is configured to be attached to a front side (F) of the vehicle (1) with at least one rear support (11_4), wherein the lateral push element (10) is provided on the beam component (11) laterally outside the rear support (11_4), towards an end portion (111) of the beam component (11).

9. A system (2) configured to be arranged on a front side (F) of a vehicle (1), wherein the system (2) comprises two beam components (11, 11_1, 11_2) according to any one of the claims 6 to 8.

10. The system (2) of claim 9, wherein the system (2) is an integrated beam system.

11. The system (2) of claim 9 or 10, wherein the system (2) comprises a bumper beam as a first beam component (11_1) of the two beam components (11_1, 11_2) of the system (2) and a lower beam component as a second beam component (11_2) of the two beam components (11_1, 11_2) of the system (2).

12. A vehicle (1) comprising the system (2) according to any one of claims 9 to 11.

13. A method for manufacturing a beam component (11) according to any one of claims 6-8 configured to be arranged on a front side (F) of a vehicle (1), wherein the beam component (11) is configured for absorbing and/or dissipating energy during a collision, wherein the method comprises arranging at each end portion (111) of the beam component (11) a lateral push element (10) according to any one of claims 1 to 5.

14. A method for manufacturing a vehicle (1), wherein the method comprises arranging on a front side (F) of the vehicle (1) the system (2) according to any one of claims 9 to 11.

15. The method according to claim 14, wherein a lateral push element (10) according to any one of the claims 1-5is arrangeable at an end portion (111) of a beam component (11) according to any one of the claims 6-8 and wherein the lateral push element (10) is :
- inserted into the beam component (11) at the end portion (111) of the beam component (11); and/or
- arranged at least partially around the beam component (11) at the end portion (111) of the beam component (11).
